# EUROPÄISCHE PATENTSCHRIFT

(11) **EP 3 519 692 B1**
(45) Veröffentlichungstag und Bekanntmachung des Hinweises auf die Patenterteilung: **24.03.2021**
(21) Anmeldenummer: 17772389.7
(22) Anmeldetag: 22.09.2017
(51) Int. Cl.: F03D 1/06

(54) **ROTORBLATTBESCHICHTUNG**
ROTOR BLADE COATING
REVÊTEMENT DE PALE DE ROTOR

(30) Priorität: 28.09.2016 DE 102016118401
(43) Veröffentlichungstag der Anmeldung: 07.08.2019
(73) Patentinhaber: Muehlhan AG, 21107 Hamburg (DE)
(72) Erfinder: PACHAI, Vandad, 6000 Kolding (DK); MOMBER, Andreas, 20459 Hamburg (DE)
(74) Vertreter: Raffay & Fleck
(86) Internationale Anmeldenummer: PCT/EP2017/073986
(87) Internationale Veröffentlichungsnummer: WO 2018/060065

(56) Entgegenhaltungen:
- EP-A1- 2 708 740
- WO-A1-2011/018695
- DE-A1-102008 006 427
- DE-U1-202012 008 475
- US-A1- 2005 189 345

## Beschreibung

Die vorliegende Erfindung betrifft ein Rotorblatt aufweisend eine Beschichtung, ein entsprechendes Verfahren zur Herstellung der Beschichtung sowie ein Verfahren zum Heizen und/oder Enteisen der äußeren Oberfläche des Rotorblattes und/oder einer auf der äußeren Oberfläche des Rotorblatts aufgebrachten äußersten Schicht Die Dokumente DE102008006427 A1 und US2005189345 A1 offenbaren Vorderkanten-Heizgeräte mit Heizelementen in Form von Heizschichten.

Infolge des zunehmenden Interesses an regenerativen Energien gewinnt auch die Nutzung der Windkraft durch Windkraftanlagen immer mehr Bedeutung.

Eine Windkraftanlage besteht im Wesentlichen aus den 50 bis 150 m hohen Turmbauten, der Gondel mit den maschinellen Einrichtungen und dem Rotor mit horizontaler Achse sowie, meist drei, Rotorblättern.

Im Zuge der Weiterentwicklung solcher Windkraftanlagen sorgen immer größere Rotorblätter moderner Anlagen für eine zunehmende Leistung. Dabei ist es besonders wichtig, einen einwandfreien und möglichst wartungsarmen Betrieb dieser Anlagen gewährleisten zu können. Die Rotorblätter sind aber starken Umweltbelastungen ausgesetzt, wie Schnee, Regen, Hitze, Kälte und UV-Strahlung. Aber auch zu Blitzeinschlägen in die Windkraftanlagen kann es kommen. Die Folge sind u.a. Erosion an den Rotorblattkanten, Korrosion, Schäden durch Blitzeinschläge und Eisbildung auf den Rotorblättern und damit sich zunehmend verschlechternde aerodynamische und statische Eigenschaften der Rotorblätter. Diese Veränderungen beeinträchtigen nicht nur die Effizienz der Windenergieanlage, sie verursachen auch höhere Geräuschemissionen und gefährden auch den Stand der Windkraftanlage.

Im Stand der Technik sind verschiedene Ansätze bekannt, diesen Umwelteinwirkungen auf die Rotorblätter entgegenzuwirken. So ist es bekannt, als Blitzschutz in der Rotorblattspitze und/oder verteilt auf dem Rotorblatt ein oder mehrere metallische Rezeptoren einzubringen. Vom Rezeptor, z. B. an der Blattspitze, wird eine Blitzstromableitung im Rotorblatt bis zur Blattwurzel geführt. Der Blitz schlägt so in den Rezeptor ein und wird dann über die Blitzableitung im Blattinneren und den weiteren Weg zur Erde über das Maschinenhaus und den Turm abgeleitet.

Auch ist es bekannt, verschiedene Beschichtungen zum Beispiel aus pigmentiertem Polyurethan auf die Rotorblätter aufzubringen, um den Umweltstressfaktoren Rechnung zu tragen und somit das Schädigungsrisiko zu minimieren.

Der Erfindung liegt die Aufgabe zugrunde, eine funktionale mehrschichtige Beschichtung zu entwickeln, die einen gesamtheitlichen Schutz gegen die verschiedenen Umwelteinflüsse darstellt und auch eine einfache und kostengünstige Herstellung und Inspektion gewährleistet.

Die Aufgabe wird gelöst durch ein Rotorblatt mit den Merkmalen des Anspruchs 1. Vorteilhafte Weiterbildungen eines solchen Rotorblattes sind in den abhängigen Ansprüchen 2 bis 6 bezeichnet. Gelöst wird die Aufgabe auch durch ein Verfahren zur Beschichtung des erfindungsgemäßen Rotorblattes mit den Merkmalen des Anspruchs 7. Vorteilhafte Weiterbildungen dieses Verfahrens sind in den abhängigen Ansprüchen 8 bis 12 bezeichnet. Gelöst wird die Aufgabe auch durch eine Windenergieanlage nach Anspruch 13. Der erfindungsgemäße Ansatz besteht darin, dass die äußere Oberfläche eines Rotorblattes eine, insbesondere direkt auf ihr angeordnete, mindestens zweischichtige Beschichtung aufweist, die eine erste haftvermittelnde metallische Schicht und/oder eine erste haftvermittelnde Schicht aufweisend elektrische Heizelemente und eine zweite metallische Schicht umfasst, wobei die erste haftvermittelnde metallische Schicht und/oder die erste haftvermittelnde Schicht aufweisend elektrische Heizelemente zwischen der äußeren Oberfläche des Rotorblatts und der zweiten metallischen Schicht angeordnet ist.

Dabei wird als erste haftvermittelnde Schicht sowohl eine erste haftvermittelnde metallische Schicht als auch eine erste haftvermittelnde Schicht aufweisend elektrische Heizelemente verstanden. Die mindestens zweischichtige Beschichtung weist also insbesondere eine als erste haftvermittelnde Schicht und eine zweite metallische Schicht auf.

Die äußere Oberfläche ist insbesondere die äußere Oberfläche des unbeschichteten Rotorblattes und/oder die äußerste glas- und/oder kohlefaserverstärkte Kunststofffläche, insbesondere die äußerste glas- und/oder kohlefaserverstärkten Kunstharzfläche, des Rotorblattes und/oder des unbeschichteten Rotorblattes.

Die erste haftermittelnde metallische Schicht und/oder die erste haftvermittelnde Schicht, insbesondere metallisch oder aufweisend mindestens ein elektrisches Heizelement, dient dem Übergang und somit der Haftvermittlung zwischen der äußeren Oberfläche, beispielsweise Kunststoffoberfläche, z.B. aus glas- und/oder kohlefaserverstärkten Kunstharzen, wie z.B. Epoxid, des Rotorblatts und der zweiten metallischen Schicht. Des Weiteren kann diese erste Schicht als Wärmequelle und/oder Heizquelle für die Erwärmung/Enteisung der äußeren Oberfläche des Rotorblatts, der Beschichtung und/oder der äußersten auf der äußeren Oberfläche des erfindungsgemäßen Rotorblatts aufgebrachten Schicht fungieren. Durch das Anlegen einer elektrischen Spannung an die erste haftermittelnde metallische Schicht und/oder an die elektrischen Heizelemente der ersten haftvermittelnden Schicht kann Wärme in der ersten haftvermittelnden metallischen Schicht und/oder in den elektrischen Heizelementen der ersten haftvermittelnden Schicht erzeugt werden. Die zweite metallische Schicht fungiert zum einen als Rezeptor und Leiter für Blitze. Insbesondere wird der Blitz durch die zweite metallische Schicht und eine Blitzstromableitung im und/oder auf dem Rotorblatt beispielsweise und über eine weitere Blitzstromableitung, beispielsweise aufweisend einen Schleifring und einen abgeschirmten Leiter im Turm, weiter zum Boden geleitet. Bevorzugt wird es, wenn im Bereich der Beschichtung und/oder im gesamten Rotorblatt keine innen im Rotorblatt liegende Blitzableitstruktur vorhanden ist. Zum anderen fungiert die zweite metallische Schicht als Erosionswiderstand und ermöglicht dennoch ein Enteisen des Rotorblatts bzw. der Beschichtung und/oder deren äußerer Schicht durch Heizen der ersten haftvermittelnden Schicht.

Einen weiteren Aspekt der Erfindung bildet ein Verfahren zur Beschichtung eines Rotorblattes mit einer außen liegenden Oberfläche, wobei zunächst auf der außen liegenden Oberfläche eine erste haftvermittelnde metallische Schicht und/oder eine erste haftvermittelnde Schicht aufweisend elektrische Heizelemente aufgebracht wird und anschließend eine zweite metallische Schicht so aufgebracht ist, dass die erste haftvermittelnde metallische Schicht und/oder die erste haftvermittelnde Schicht aufweisend elektrische Heizelemente zwischen der außen liegenden Oberfläche und der zweiten metallischen Schicht angeordnet ist, wobei die zweite metallische Schicht mittels Kaltgasspritzen aufgebracht wird.

Generell kann ein Rotorblatt einen Körper mit Oberflächen umfassen, die eine Druckseite, eine Saugseite, eine Vorderkante und eine Hinterkante festlegen, die sich zwischen einer Rotorblattspitze und einer Rotorblattwurzel erstrecken. Dabei umfasst die äußere Oberfläche des Rotorblatts die Summe dieser Oberflächen.

Auch kann das Rotorblatt generell eine Rotorblattspitze, eine Rotorblattwurzel, eine Druckseite, eine Saugseite, eine Vorderkante und eine Hinterkante aufweisen und kann sich die Beschichtung ausgehend von der Rotorblattspitze entlang der Vorderkante in Richtung Rotorblattwurzel erstrecken und/oder sich die Beschichtung ausgehend von der Vorderkante beidseitig in Richtung Hinterkante erstrecken. Besonders bevorzugt wird die Beschichtung betreffend das erfindungsgemäße Verfahren ausgehend von der Rotorblattspitze entlang der Vorderkante in Richtung Rotorblattwurzel und/oder ausgehend von der Vorderkante beidseitig in Richtung Hinterkante aufgebracht werden.

Besonders bevorzugt erstreckt sich die Beschichtung mindestens über ein Viertel der Länge der Vorderkante ausgehend von der Rotorblattspitze, insbesondere mindestens über die halbe Länge der Vorderkante, und/oder erstreckt sich die Beschichtung ausgehend von der Vorderkante jeweils beidseitig in Richtung Hinterkante insbesondere mindestens über ein Viertel der Breite der Druckseite und der Saugseite und/oder insbesondere jeweils mindestens über eine Breite von 0,2m. Besonders bevorzugt wird die Beschichtung betreffend das erfindungsgemäße Verfahren über mindestens ein Viertel der Länge der Vorderkante ausgehend von der Rotorblattspitze, insbesondere mindestens über die halbe Länge der Vorderkante, und/oder ausgehend von der Vorderkante jeweils beidseitig in Richtung Hinterkante insbesondere mindestens über ein Viertel der Breite der Druckseite und der Saugseite und/oder insbesondere jeweils mindestens über eine Breite von 0,2m aufgebracht.

Beschichtung kann umfassen eine aufgebrachte, festhaftende Schicht auf die Oberfläche eines Werkstückes. Dabei kann es sich um eine dünne Schicht oder eine dicke Schicht sowie um mehrere in sich zusammenhängende Schichten handeln.

Ein elektrisches Heizelement kann umfassen ein Metallgelege, Metallgewebe und/oder Metalldrähte aus oder enthaltend bspw. Kupfer, Aluminium und/oder Bronze.

Die erste haftvermittelnde metallische Schicht kann eine Schicht aus Kupfer, Aluminium und/oder Bronze und/oder eine Schicht, die aus Kupfer, Aluminium und/oder Bronze oder einer Legierung eines dieser Metalle umfassend besteht, umfassen oder daraus bestehen. Die erste haftvermittelnde Schicht kann ferner beispielsweise eine Schicht aus Kupfer, Aluminium und/oder Bronze und/oder eine Schicht, die aus Kupfer, Aluminium und/oder Bronze oder einer Legierung eines dieser Metalle umfassend besteht, umfassen oder daraus bestehen.

In einer Ausgestaltung ist die zweite metallische Schicht direkt auf der ersten haftvermittelnden metallischen Schicht und/oder der ersten haftvermittelnden Schicht aufweisend Heizelemente aufgetragen, d.h. es ist keine weitere Schicht zwischen der ersten haftvermittelnden metallischen Schicht bzw. der ersten haftvermittelnden Schicht aufweisend Heizelement und der zweiten metallischen Schicht aufgebracht. Dies gilt insbesondere dann, wenn die erste haftvermittelnden Schicht, aufweisend Heizelemente, abgesehen von den Heizelementen elektrisch isolierend ausgeführt ist. Alternativ oder zusätzlich kann zwischen der ersten haftvermittelnden und zweiten metallischen Schicht eine elektrisch isolierende Zwischenschicht vorgesehen sein oder aufgebracht werden. Diese weist insbesondere eine Dicke geringer als die Dicke der ersten haftvermittelnden und/oder zweiten metallischen Schicht auf.

In einer anderen Ausgestaltung wird zwischen der ersten haftvermittelnden und zweiten metallischen Schicht eine mechanisch dämpfende, insbesondere stoßabsorbierende Zwischenschicht vorgesehen oder aufgebracht. Diese weist insbesondere eine Dicke geringer als die Dicke der ersten haftvermittelnden und/oder zweiten metallischen Schicht auf. Sie ist insbesondere mit der isolierenden Zwischenschicht als eine Zwischenschicht ausgeführt, die beide Funktionen wahrnimmt.

In einer weiteren vorteilhaften Variante kann die zweite metallische Schicht und/oder jede weitere Schicht, die auf der zweiten Schicht aufgebracht ist oder wird, mindestens eine Wärmeleitfähigkeit von 30 W/(mK), insbesondere von mindestens 50 W/(mK), insbesondere von mindestens 100 W/(mK), insbesondere von 100 bis 400 W/(mK), aufweisen und/oder die Summe der Wärmeleitwiderstände der zweiten metallischen Schicht und jeder möglicherweise vorhandenen weiteren Schicht zusammen kleiner gleich 1·10⁻⁴ (m²K)/W, insbesondere kleiner gleich 1·10⁻⁵ (m²K)/W sein und/oder die Wärmeleitfähigkeit der zweiten metallischen Schicht und jeder möglicherweise vorhandenen weiteren Schicht zusammen mindestens 30 W/(mK), insbesondere von mindestens 100 W/(mK), insbesondere von 100 bis 400 W/(mK) aufweisen.

Als weitere Schicht wird jede Schicht bezeichnet, die von der ersten haftvermittelnden metallischen Schicht bzw. der ersten haftvermittelnden Schicht aufweisend Heizelemente abgewandt auf der zweiten metallischen Schicht angeordnet ist.

Des Weiteren kann eine äußerste Schicht der Beschichtung eine Vickers-Härte von mindesten 100, insbesondere 100 bis 200, bei einer Prüfkraft F von 10 Kilopond bei einer Prüfbelastung, die 12 s andauert, aufweisen, insbesondere kann die zweite metallische Schicht die äußerste Schicht bilden.

Eine äußerste Schicht bezeichnet die von der ersten haftvermittelnden metallischen Schicht bzw. der ersten haftvermittelnden Schicht aufweisend Heizelemente am weitesten abgewandte Schicht, die auf der zweiten metallischen Schicht angeordnet ist.

Durch die guten Wärmeleiteigenschaften wird eine gute Wärmeleitung von der ersten haftermittelnden metallischen Schicht und/oder der ersten haftvermittelnden Schicht aufweisend elektrische Heizelemente durch die äußerste Schicht gewährleistet und so die äußere Oberfläche des Rotorblatts und/oder die äußerste Schicht besonders effektiv erwärmt/enteist. Durch ihre Härte und insbesondere gleichzeitig gute Verformbarkeit weist die äußerste Schicht zudem einen hohen Erosionswiderstand auf und schützt somit das Rotorblatt vor Erosion.

Des Weiteren kann die zweite metallische Schicht die äußerste Schicht der beschichteten Oberfläche des Rotorblatts sein. Dies ermöglicht eine besonders einfache Herstellung mit wenigen Arbeitsschritten.

Auch ist es von Vorteil, wenn sich die Beschichtung über mindestens 10%, insbesondere über 20% der äußeren Oberfläche des Rotorblatts erstreckt. So kann die äußere Oberfläche des Rotorblatts ausreichend vor den Umwelteinflüssen geschützt werden.

In einer weiteren vorteilhaften Variante kann sich die Beschichtung ausgehend von der Rotorblattspitze entlang der Vorderkante in Richtung Rotorblattwurzel und/oder ausgehend von der Vorderkante beidseitig in Richtung Hinterkante erstrecken und/oder aufgebracht werden. Insbesondere kann sich die Beschichtung mindestens über ein Viertel der Länge, insbesondere mindestens über die halbe Länge, im Besonderen über die 20% bis 70% der Länge, der Vorderkante ausgehend von der Rotorblattspitze und/oder ausgehend von der Vorderkante jeweils beidseitig in Richtung Hinterkante mindestens über ein Viertel der Breite der Druckseite und der Saugseite, insbesondere mindestens über eine Breite von 0,2m, im Besonderen über eine Breite von 0,1 bis 0,3m, erstrecken und/oder aufgebracht werden. So ist das Rotorblatt ausreichend vor den Umwelteinflüssen geschützt und gleichzeitig können der Materialeinsatz für die Beschichtung und somit auch die Herstellungskosten weiter reduziert werden.

Mit besonderem Vorteil sind und/oder werden von der Rotorblattspitze ausgehend mindestens die ersten 50 cm, insbesondere die ersten 80 cm, der Länge des Rotorblattes mindestes zu 80%, insbesondere vollständig mit der Beschichtung versehen.

Mit besonderem Vorteil kann sich die Erstreckung der Schichten der Beschichtung unterscheiden. Insbesondere ist und/oder wird die erste haftvermittelnde Schicht größer ausgeführt als die zweite metallische Schicht. Insbesondere erstreckt sich die erste haftvermittelnde Schicht über mindestens 50% der Länge des Rotorblattes, insbesondere mindestens 70% der Rotorblattlänge und/oder wird sie über mindestens 50% der Länge des Rotorblattes, insbesondere mindestens 70% der Rotorblattlänge aufgebracht. Dabei erstreckt sie sich insbesondere von der Rotorblattspitze ausgehend und/oder wird sie insbesondere von der Rotorblattspitze ausgehend aufgebracht. Die zweite metallische Schicht erstreckt sich insbesondere über 20 bis 40% der Länge des Rotorblatts und/oder wird insbesondere über 20 bis 40% der Länge des Rotorblatts aufgebracht. Dabei erstreckt sie sich insbesondere von der Rotorblattspitze ausgehend und/oder wird sie insbesondere von der Rotorblattspitze ausgehend aufgebracht. Insbesondere sind und/oder werden somit ausgehend von der Rotorblattspitze beide Schichten in der Beschichtung vorhanden und/oder aufgetragen und erstreckt sich die erste haftvermittelnde Schicht weiter als die zweite metallische und oder wird die erste haftvermittelnde Schicht weiter als die zweite metallische aufgetragen.

Weiter können die elektrischen Heizelemente untereinander verbunden sein, insbesondere eine Netzstruktur ausbilden, und/oder sich die Heizelemente über eine Fläche von 0,02% der äußeren Oberfläche des Rotorblattes erstrecken. So kann ein besonders gleichmäßiger Wärmeeintrag über die beschichtete äußere Oberfläche des Rotorblatts erzeugt werden und die äußere Oberfläche des Rotorblatts und/oder die äußerste Schicht besonders gleichmäßig erwärmt/enteist werden. Dies ist sowohl für das Materialverhalten des Rotorblatts als auch für die Beschichtung von Vorteil, das Risiko von Wärmespannungen kann so minimiert werden.

Auch kann die erste haftvermittelnde metallische Schicht und/oder die erste haftvermittelnde Schicht aufweisend elektrische Heizelemente eine Dicke von 35 bis 90 *µ*m, insbesondere von 50 bis 75 *µ*m, aufweisen und/oder in einer solchen Dicke aufgebracht werden. So kann eine ausreichend gute Haftvermittlung und Wärmeinduktion erreicht werden bei gleichzeitig geringem Materialeinsatz.

In einer weiteren vorteilhaften Variante kann die erste haftvermittelnde metallische Schicht und/oder die erste haftvermittelnde Schicht aufweisend elektrische Heizelemente zumindest teilweise eine thermisch gespritzte Schicht sein und/oder werden, und/oder die zweite Schicht eine mittels Kaltgasspritzen aufgebrachte Schicht sein und/oder werden.

So kann eine besonders geringe Porosität, gute Anbindung an die äußere Oberfläche des Rotorblatts bzw. an die erste Schicht sowie Rissfreiheit und homogene Mikrostruktur erreicht werden.

Beim thermischen Spritzen werden die Werkstoffe, die als Beschichtung aufgetragen werden sollen, innerhalb oder außerhalb eines Spritzbrenners ab-, an- oder aufgeschmolzen, in einem Gasstrom in Form von Spritzpartikeln beschleunigt und auf die Oberfläche des zu beschichtenden Bauteils geschleudert. Die Bauteiloberfläche wird dabei nicht angeschmolzen und nur in geringem Maße thermisch belastet. Eine Schichtbildung findet statt, da die Spritzpartikel beim Auftreffen auf die Bauteiloberfläche prozess- und materialabhängig mehr oder minder abflachen, vorrangig durch mechanische Verklammerung haften bleiben und lagenweise die Spritzschicht aufbauen.

Beim Kaltgasspritzen wird der Beschichtungswerkstoff in Pulverform mit sehr hoher Geschwindigkeit auf die Oberfläche des zu beschichtenden Bauteils aufgebracht. Dazu wird ein auf wenige hundert Grad aufgeheiztes Prozessgas durch Expansion in einer Lavaldüse auf Überschallgeschwindigkeit beschleunigt und anschließend die Pulverpartikel in den Gasstrahl injiziert. Die injizierten Spritzpartikel werden dabei auf eine so hohe Geschwindigkeit beschleunigt, dass sie im Gegensatz zu anderen thermischen Spritzverfahren auch ohne vorangehendes An- oder Aufschmelzen beim Aufprall auf das Substrat eine dichte und fest haftende Schicht bilden. Die kinetische Energie zum Zeitpunkt des Aufpralls reicht für ein vollständiges Aufschmelzen der Partikel nicht aus. Generell werden beim Kaltgasspritzen Gastemperaturen von weniger als 200 °F und/oder Partikelgeschwindigkeiten größer 50 ft/s, insbesondere größer 100 ft/s, insbesondere größer 150 ft/s bevorzugt. Das Kaltgasspritzen ermöglicht Schichten das Erzeugen von Schichten bzw. die dadurch erzeugten Schichten zeichnen sich insbesondere durch weniger Verunreinigungen, Oxidationen und Spannungen aus.

Bevorzugt wird die erste haftvermittelnde metallische Schicht und/oder die erste haftvermittelnde Schicht aufweisend elektrische Heizelemente zumindest teilweise mittels Schmelzbadspritzen, Lichtbogenspritzen, Plasmaspritzen, Flammspritzen, Hochgeschwindigkeitsflammspritzen, Detonationsspritzen, Laserspritzen und/oder PTWA-Spritzen aufgebracht. Insbesondere werden die injizierten Spritzpartikel für die Aufbringungen der ersten haftvermittelnden metallischen Schicht und/oder der ersten haftvermittelnden Schicht aufweisend elektrische Heizelemente innerhalb oder außerhalb des Spritzbrenners an- oder aufgeschmolzen.

Des Weiteren ist es von Vorteil, wenn die zweite metallische Schicht aus Bronze, Aluminium, Kupfer oder Legierungen beinhaltend Bronze, Aluminium und/oder Kupfer besteht. Da diese Materialien die optimale Kombination aus guten Wärmeleiteigenschaften, guten Härteeigenschaften und guten Verformungseigenschaften aufweisen, kann so gleichzeitig ein besonders guter Erosionsschutz erreicht werden und eine Eisbildung vermieden bzw. entfernt werden.

In einer weiteren vorteilhaften Variante kann die zweite metallische Schicht mit einer Vorrichtung zum Ableiten von Blitzen elektrisch gekoppelt sein und/oder die erste haftvermittelnde metallische Schicht und/oder die erste haftvermittelnde Schicht aufweisend elektrische Heizelemente mit mindestens einer Vorrichtung zum Leiten von Strom durch die erste haftvermittelnde metallische Schicht und/oder die elektrischen Heizelemente gekoppelt sein und/oder das Rotorblatt Mittel umfassen zum elektrischen Verbinden der ersten haftvermittelnden metallischen Schicht und/oder der ersten haftvermittelnden Schicht aufweisend Heizelemente mit mindestens einer Vorrichtung zum Leiten von Strom durch die erste haftvermittelnde metallische Schicht und/oder die elektrischen Heizelemente, wobei die mindestens eine Vorrichtung, die Mittel und/oder das Rotorblatt insbesondere so eingerichtet sind, dass der Strom zur Erwärmung der zweiten metallischen Schicht und/oder Enteisung der äußeren Oberfläche des Rotorblatts und/oder der äußersten Schicht führt.

Eine Vorrichtung zum Ableiten von Blitz kann u.a. einen Schleifring, eine Blitzableitung im Rotorblatt und/oder eine Erdungsanlage umfassen.

Insbesondere sind alle in Bezug auf die Vorrichtung als vorteilhaft geschilderten Merkmale auch verfahrensgemäß für das Verfahren vorteilhaft. Insbesondere wird zur Umsetzung des Verfahrens eine erfindungsgemäße Vorrichtung verwendet.

Einen dritten Aspekt der Erfindung bildet ein Verfahren zum Heizen und/oder Enteisen der äußeren Oberfläche eines Rotorblatts und/oder einer auf der Oberfläche des Rotorblatts aufgebrachten äußersten Schicht, wobei das Rotorblatt mindestens eine zweischichtige Beschichtung aufweist, die eine erste haftvermittelnde metallische Schicht und/oder eine erste haftvermittelnde Schicht aufweisend elektrische Heizelemente und eine zweite metallische Schicht umfasst, wobei die erste haftvermittelnde metallische Schicht und/oder die erste haftvermittelnde Schicht aufweisend elektrische Heizelemente zwischen der äußeren Oberfläche des Rotorblattes und der zweiten metallischen Schicht angeordnet ist, wobei an die erste haftvermittelnde metallische Schicht und/oder an mindestens ein elektrisches Heizelement der ersten haftvermittelnde Schicht aufweisend elektrische Heizelemente mindestens eine Spannung so angelegt wird, dass Strom durch die erste haftvermittelnde metallische Schicht und/oder durch das mindestens eine elektrische Heizelement fließt und zu einer Erwärmung der zweiten metallischen Schicht und/oder einer Enteisung der äußeren Oberfläche des Rotorblatts und/oder der äußersten Schicht führt.

Gelöst wird die Aufgabe auch durch eine Windenergieanlage aufweisend einen Turm und eine Gondel sowie mindestens zwei, insbesondere drei, an der Gondel um eine gemeinsame Achse drehbar befestigte erfindungsgemäße Rotorblätter und/oder erfindungsgemäß beschichtet Rotorblätter. Insbesondere weist die Windenergieanlage eine mit der zweiten Sicht der Beschichtung mindestens eines Rotorblattes verbindbare und/oder verbundene Erdung auf, die insbesondere nicht innerhalb der Rotorblätter, insbesondere lediglich außerhalb der Rotorblätter und/oder durch eine Beschichtung der Rotorblätter geführt wird und/oder gebildet wird. Insbesondere weist die Windenergieanlage eine mit der ersten Schicht der Beschichtung mindestens eines Rotorblattes verbindbare und/oder verbundene, insbesondere regelbare, Spannungsversorgung und/oder ein Netzteil auf, wobei die Windenergieanlage eingerichtet ist, wobei an die erste haftvermittelnde metallische Schicht und/oder an mindestens ein elektrisches Heizelement der ersten haftvermittelnde Schicht aufweisend elektrische Heizelemente mindestens eine Spannung der Spannungsversorgung und/oder des Netzteils so anzulegen, dass Strom durch die erste haftvermittelnde metallische Schicht und/oder durch das mindestens eine elektrische Heizelement fließt und zu einer Erwärmung der zweiten metallischen Schicht und/oder einer Enteisung der äußeren Oberfläche des Rotorblatts und/oder der äußersten Schicht führt.

Insbesondere sind alle in Bezug auf die Rotorblätter als vorteilhaft geschilderten Merkmale auf die Windenergieanlage übertragbar und sind sie auch verfahrensgemäß für das Verfahren zum Heizen und/oder Enteisen vorteilhaft. Insbesondere wird zur Umsetzung des Verfahrens zum Heizen und/oder Enteisen eine erfindungsgemäße Vorrichtung verwendet.

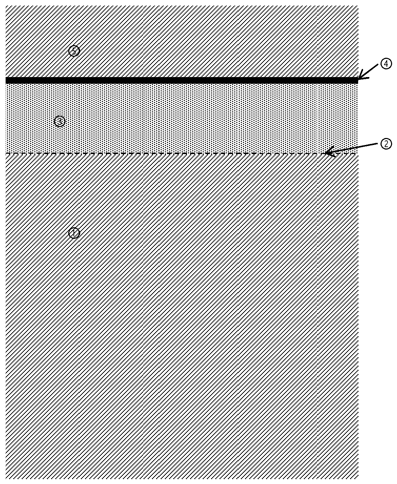

Fig. 1 zeigt exemplarisch einen möglichen Aufbau als Teilschnitt durch ein Rotorblatt.

Figur 1 zeigt einen Teil des Rotorblattes im Querschnitt. Zu erkennen ist ein erster Teil des Rotorblatts 1 aus glasfaserverstärktem Kunststoff. Ohne weitere Beschichtung bildet dieser glasfaserverstärkte Kunststoff die äußere Oberfläche 2. Erfindungsgemäß wird diese Oberfläche auch beim Vorhandensein einer Beschichtung als äußere Oberfläche 2 bezeichnet. Darauf aufgebracht ist eine erste, haftvermittelnde Schicht 3. Darauf aufgebracht ist eine Zwischenschicht 4, auf der eine zweite, metallische Schicht 5 aufgebracht ist, die nach der Beschichtung die äußere Oberfläche des beschichteten Rotorblattes bildet.

## Patentansprüche

1. Rotorblatt (1) aufweisend eine äußere Oberfläche (2) und **gekennzeichnet durch** eine auf der äußeren Oberfläche (2) aufgebrachte mindestens zweischichtige Beschichtung, aufweisend eine erste haftvermittelnde metallische Schicht (3) und/oder eine erste haftvermittelnde Schicht (3) aufweisend elektrische Heizelemente und eine zweite metallische Schicht (5), wobei die erste haftvermittelnde metallische Schicht (3) und/oder die erste haftvermittelnde Schicht (3) aufweisend elektrische Heizelemente zwischen der äußeren Oberfläche (2) des Rotorblatts (1) und der zweiten metallischen Schicht (5) angeordnet ist, wobei zwischen der ersten haftvermittelnden Schicht (3) und der zweiten metallischen Schicht (3) eine mechanisch dämpfende, insbesondere stoßabsorbierende Zwischenschicht (4) vorgesehen oder aufgebracht ist.

2. Rotorblatt (1) nach Anspruch 1, wobei die zweite metallische Schicht (5) und/oder jede weitere Schicht, die auf der zweiten metallischen Schicht (5) anordnet ist, mindestens eine Wärmeleitfähigkeit von 100 bis 400 W/(mK) und/oder die Wärmeleitfähigkeit der zweiten metallischen Schicht (5) und jeder möglicherweise vorhandenen weiteren Schicht zusammen mindestens 30 W/(mK), insbesondere von mindestens 100 W/(mK), insbesondere von 100 bis 400 W/(mK) aufweisen.

3. Rotorblatt (1) nach einem vorstehenden Anspruch, wobei eine äußerste Schicht der Beschichtung eine Vickers-Härte von mindestens 100 aufweist, und insbesondere die zweite metallische Schicht (5) die äußerste Schicht bildet.

4. Rotorblatt (1) nach einem vorstehenden Anspruch, wobei die elektrischen Heizelemente untereinander verbunden sind, insbesondere eine Netzstruktur ausbilden, und/oder sich die Heizelemente mindestens über eine Fläche von 0,02% der äußeren Oberfläche (2) des Rotorblattes (1) erstrecken.

5. Rotorblatt (1) nach einem vorstehenden Anspruch, wobei die erste haftvermittelnde metallische Schicht (3) und/oder die erste haftvermittelnde Schicht (3) aufweisend elektrische Heizelemente zumindest teilweise eine thermisch gespritzte Schicht ist und/oder die zweite metallische Schicht (5) eine mittels Kaltgasspritzen aufgebrachte Schicht ist.

6. Rotorblatt (1) nach einem vorstehenden Anspruch, wobei die zweite metallische Schicht (5) mit einer Vorrichtung zum Ableiten von Blitzen elektrisch gekoppelt ist und/oder die erste haftvermittelnde metallische Schicht (3) und/oder die erste haftvermittelnde Schicht (3) aufweisend elektrische Heizelemente mit mindestens einer Vorrichtung zum Leiten von Strom durch die erste haftvermittelnde metallische Schicht (3) und/oder die elektrischen Heizelemente gekoppelt ist und/oder das Rotorblatt (1) Mittel umfasst zum elektrischen Verbinden der ersten haftvermittelnden metallischen Schicht (3) und/oder der ersten haftvermittelnden Schicht (3) aufweisend Heizelemente mit mindestens einer Vorrichtung zum Leiten von Strom durch die erste haftvermittelnde metallische Schicht (3) und/oder die elektrischen Heizelemente, wobei die mindestens eine Vorrichtung, die Mittel und/oder das Rotorblatt (1) insbesondere so eingerichtet sind, dass der Strom zu einer Erwärmung der zweiten metallischen Schicht (5) und/oder einer Enteisung der äußeren Oberfläche (2) des Rotorblatts (1) und/oder der äußersten Schicht führt.

7. Verfahren zur Beschichtung eines Rotorblattes (1) mit einer außen liegenden Oberfläche (2), wobei zunächst auf der außen liegenden Oberfläche (2) eine erste haftvermittelnde metallische Schicht (3) und/oder eine erste haftvermittelnde Schicht (3) aufweisend elektrische Heizelemente aufgebracht wird und anschließend eine zweite metallische Schicht (5) so aufgebracht ist, dass die erste haftvermittelnde metallische Schicht (3) und/oder die erste haftvermittelnde Schicht (3) aufweisend elektrische Heizelemente zwischen der außen liegenden Oberfläche (2) und der zweiten metallischen Schicht (5) angeordnet ist, wobei die zweite metallische Schicht (5) mittels Kaltgasspritzen aufgebracht wird.

8. Verfahren nach Anspruch 7, wobei die zweite metallische Schicht (5) und/oder jede weitere Schicht, die auf der zweiten metallischen Schicht (5) aufgebracht wird, mindestens eine Wärmeleitfähigkeit von 100 bis 400 W/(mK), aufweist und/sein und/oder die Wärmeleitfähigkeit der zweiten metallischen Schicht (5) und jeder möglicherweise vorhandenen weiteren Schicht zusammen mindestens 30 W/(mK), insbesondere von mindestens 100 W/(mK), insbesondere von 100 bis 400 W/(mK) aufweisen.

9. Verfahren nach einem der Ansprüche 7 bis 8, wobei eine äußerste Schicht der Beschichtung eine Vickers-Härte von mindesten 100 aufweist, und insbesondere die zweite metallische Schicht (5) die äußerste Schicht bildet.

10. Verfahren nach einem der Ansprüche 7 bis 9, wobei das Aufbringen der ersten haftvermittelnden Schicht (3) aufweisend elektrische Heizelemente die folgenden Schritte beinhaltet: Aufbringen der elektrischen Heizelemente auf die außen liegende Oberfläche (2) des Rotorblattes (1) und Aufbringen eines haftvermittelnden Materials (3) auf die elektrischen Heizelemente und/oder auf die außen liegende Oberfläche (2) des Rotorblatts (1).

11. Verfahren nach einem der Ansprüche 7 bis 10, wobei die erste haftvermittelnde metallische Schicht (3) und/oder die erste haftvermittelnde Schicht (3) aufweisend elektrische Heizelemente zumindest teilweise mittels thermischen Spritzens aufgebracht wird und/oder die metallische zweite Schicht (5) mittels Kaltgasspritzen aufgebracht wird.

12. Verfahren nach einem der Ansprüche 7 bis 11, wobei die zweite metallisch Schicht (5) mit einer Vorrichtung zum Ableiten von Blitzen elektrisch gekoppelt wird und/oder die erste haftvermittelnde metallische Schicht (3) und/oder die erste haftvermittelnde Schicht (3) aufweisend Heizelemente mit mindestens einer Vorrichtung zum Leiten von Strom durch die erste haftvermittelnde metallische Schicht (3) und/oder die elektrischen Heizelemente gekoppelt wird und/oder Mittel zum elektrischen Koppeln der ersten haftvermittelnden metallischen Schicht (3) und/oder der ersten haftvermittelnden Schicht (3) aufweisend elektrische Heizelemente mit mindestens einer Vorrichtung zum Leiten von Strom durch die erste haftvermittelnde metallische Schicht (3) und/oder die elektrischen Heizelemente geschaffen werden, wobei die mindestens eine Vorrichtung, die Mittel und/oder das Rotorblatt (1) insbesondere so ausgebildet werden, dass der Strom zu einer Erwärmung der zweiten metallischen Schicht (5) und/oder einer Enteisung der äußeren Oberfläche (2) des Rotorblatts (1) und/oder der äußersten Schicht führt.

13. Windenergieanlage aufweisend einen Turm und eine Gondel sowie mindestens zwei, insbesondere drei an der Gondel um eine gemeinsame Achse drehbar befestigte Rotorblätter (1) nach einem der vorstehenden Ansprüche 1 bis 6 und/oder beschichtet nach einem der vorstehenden Ansprüche 7 bis 12.

## Claims

1. A rotor blade (1) comprising an outer surface (2) and **characterised by** an at least two-layer coating applied to the outer surface (2), comprising a first adhesion-promoting metallic layer (3) and/or a first adhesion-promoting layer (3) comprising electrical heating elements and a second metallic layer (5), wherein the first adhesion-promoting metallic layer (3) and/or the first adhesion-promoting layer (3) comprising electrical heating elements is arranged between the outer surface (2) of the rotor blade (1) and the second metallic layer (5), wherein a mechanically damping, in particular shock-absorbing intermediate layer (4) is provided or applied between the first adhesion-promoting layer (3) and the second metallic layer (3).

2. The rotor blade (1) according to claim 1, wherein the second metallic layer (5) and/or any further layer which is arranged on the second metallic layer (5) has at least a thermal conductivity of 100 to 400 W/(mK) and/or the thermal conductivity of the second metallic layer (5) and any further layer which may be present together has at least 30 W/(mK), in particular of at least 100 W/(mK), in particular of 100 to 400 W/(mK).

3. The rotor blade (1) according to a preceding claim, wherein an outermost layer of the coating has a Vickers hardness of at least 100, and in particular the second metallic layer (5) forms the outermost layer.

4. The rotor blade (1) according to a preceding claim, wherein the electrical heating elements are interconnected, in particular form a network structure, and/or the heating elements extend at least over an area of 0.02% of the outer surface (2) of the rotor blade (1).

5. The rotor blade (1) according to a preceding claim, wherein the first adhesion-promoting metallic layer (3) and/or the first adhesion-promoting layer (3) comprising electrical heating elements is at least partially a thermally sprayed layer and/or the second metallic layer (5) is a layer applied by means of cold gas spraying.

6. The rotor blade (1) according to a preceding claim, wherein the second metallic layer (5) is electrically coupled to a device for dissipating lightning and/or the first adhesion-promoting metallic layer (3) and/or the first adhesion-promoting layer (3) comprising electric heating elements is coupled to at least one device for conducting current through the first adhesion-promoting metallic layer (3) and/or the electric heating elements, and/or the rotor blade (1) comprises means for electrically connecting the first adhesion-promoting metallic layer (3) and/or the first adhesion-promoting layer (3) comprising heating elements to at least one device for conducting current through the first adhesion-promoting metallic layer (3) and/or the electrical heating elements, wherein the at least one device, the means and/or the rotor blade (1) are in particular arranged such that the current leads to a heating of the second metallic layer (5) and/or a de-icing of the outer surface (2) of the rotor blade (1) and/or the outermost layer.

7. A method for coating a rotor blade (1) with an outer surface (2), wherein firstly a first adhesion-promoting metallic layer (3) and/or a first adhesion-promoting layer (3) comprising electrical heating elements is applied to the outer surface (2) and then a second metallic layer (5) is applied in such a way that the first adhesion-promoting metallic layer (3) and/or the first adhesion-promoting layer (3) comprising electrical heating elements is applied between the outer surface (2) and the second metallic layer (5), that the first adhesion-promoting metallic layer (3) and/or the first adhesion-promoting layer (3) comprising electrical heating elements is arranged between the outer surface (2) and the second metallic layer (5), wherein the second metallic layer (5) is applied by means of cold gas spraying.

8. The method according to claim 7, wherein the second metallic layer (5) and/or any further layer which is applied to the second metallic layer (5) has at least a thermal conductivity of 100 to 400 W/(mK), and/or the thermal conductivity of the second metallic layer (5) and any further layer which may be present together has at least 30 W/(mK), in particular of at least 100 W/(mK), in particular of 100 to 400 W/(mK).

9. The method according to any one of claims 7 to 8, wherein an outermost layer of the coating has a Vickers hardness of at least 100, and in particular the second metallic layer (5) forms the outermost layer.

10. The method according to any one of claims 7 to 9, wherein applying the first adhesion-promoting layer (3) comprising electric heating elements comprises the following steps: applying the electrical heating elements to the external surface (2) of the rotor blade (1) and applying an adhesion-promoting material (3) to the electrical heating elements and/or to the external surface (2) of the rotor blade (1).

11. The method according to any one of claims 7 to 10, wherein the first adhesion-promoting metallic layer (3) and/or the first adhesion-promoting layer (3) comprising electrical heating elements is applied at least partially by means of thermal spraying and/or the metallic second layer (5) is applied by means of cold gas spraying.

12. The method according to any one of claims 7 to 11, wherein the second metallic layer (5) is electrically coupled to a device for dissipating lightning and/or the first adhesion-promoting metallic layer (3) and/or the first adhesion-promoting layer (3) comprising heating elements is coupled to at least one device for conducting current through the first adhesion-promoting metallic layer (3) and/or the electrical heating elements and/or means for electrically coupling the first adhesion-promoting metallic layer (3) and/or the first adhesion-promoting layer (3) comprising heating elements are provided. and/or means for electrically coupling the first adhesion-promoting metallic layer (3) and/or the first adhesion-promoting layer (3) comprising electrical heating elements with at least one device for conducting current through the first adhesion-promoting metallic layer (3) and/or the electrical heating elements are provided, wherein the at least one device, the means and/or the rotor blade (1) are particularly designed such that the current leads to a heating of the second metallic layer (5) and/or a de-icing of the outer surface (2) of the rotor blade (1) and/or the outermost layer.

13. A wind turbine comprising a tower and a nacelle as well as at least two, in particular three rotor blades (1) rotatably attached to the nacelle about a common axis according to one of the preceding claims 1 to 6 and/or coated according to one of the preceding claims 7 to 12.

## Revendications

1. Pale de rotor (1) comprenant une surface extérieure (2) et **caractérisée par** un revêtement à au moins deux couches appliqué sur la surface extérieure (2), comprenant une première couche métallique (3) favorisant l'adhérence et/ou une première couche (3) favorisant l'adhérence comprenant des éléments chauffants électriques et une seconde couche métallique (5), dans lequel la première couche métallique (3) favorisant l'adhérence et/ou la première couche (3) favorisant l'adhérence comportant des éléments chauffants électriques est disposée entre la surface extérieure (2) de la pale de rotor (1) et la seconde couche métallique (5), dans lequel une couche intermédiaire (4) amortissant mécaniquement, en particulier absorbant les chocs, est prévue ou appliquée entre la première couche (3) favorisant l'adhérence et la seconde couche métallique (3).

2. Pale de rotor (1) selon la revendication 1, dans laquelle la seconde couche métallique (5) et/ou toute autre couche disposée sur la seconde couche métallique (5) présente au moins une conductivité thermique de 100 à 400 W/(mK) et/ou la conductivité thermique de la seconde couche métallique (5) et de toute autre couche éventuellement présente ensemble au moins 30 W/(mK), en particulier d'au moins 100 W/(mK), en particulier de 100 à 400 W/(mK).

3. Pale de rotor (1) selon une revendication précédente, dans laquelle une couche extérieure du revêtement présente une dureté Vickers d'au moins 100, et en particulier la seconde couche métallique (5) forme la couche extérieure.

4. Pale de rotor (1) selon une revendication précédente, dans laquelle les éléments chauffants électriques sont interconnectés, en particulier forment une structure en réseau, et/ou les éléments chauffants s'étendent au moins sur une surface de 0,02% de la surface extérieure (2) de la pale de rotor (1).

5. Pale de rotor (1) selon une revendication précédente, dans laquelle la première couche métallique (3) favorisant l'adhérence et/ou la première couche (3) favorisant l'adhérence comprenant des éléments chauffants électriques est au moins partiellement une couche pulvérisée thermiquement et/ou la seconde couche métallique (5) est une couche appliquée au moyen d'une pulvérisation de gaz froid.

6. Pale de rotor (1) selon une revendication précédente, dans laquelle la seconde couche métallique (5) est couplée électriquement à un dispositif pour dissiper la foudre et/ou la première couche métallique (3) favorisant l'adhérence et/ou la première couche (3) favorisant l'adhérence comprenant des éléments chauffants électriques est couplée à au moins un dispositif pour conduire le courant à travers la première couche métallique (3) favorisant l'adhérence et/ou les éléments chauffants électriques, et/ou la pale de rotor (1) comporte des moyens pour relier électriquement la première couche métallique (3) favorisant l'adhérence et/ou la première couche (3) favorisant l'adhérence comportant des éléments chauffants à au moins un dispositif pour faire passer du courant à travers la première couche métallique (3) favorisant l'adhérence et/ou les éléments chauffants électriques, ledit au moins un dispositif, les moyens et/ou la pale de rotor (1) étant en particulier disposés de telle sorte que le courant conduit à un chauffage de la seconde couche métallique (5) et/ou à un dégivrage de la surface extérieure (2) de la pale de rotor (1) et/ou de la couche la plus extérieure.

7. Procédé de revêtement d'une pale de rotor (1) avec une surface extérieure (2), dans lequel on applique d'abord une première couche métallique (3) favorisant l'adhérence et/ou une première couche (3) favorisant l'adhérence avec des éléments chauffants électriques sur la surface extérieure (2) et ensuite une seconde couche métallique (5) de telle sorte que la première couche métallique (3) favorisant l'adhérence et/ou la première couche (3) favorisant l'adhérence avec des éléments chauffants électriques soit appliquée entre la surface extérieure (2) et la seconde couche métallique (5), que la première couche métallique (3) favorisant l'adhérence et/ou la première couche (3) favorisant l'adhérence comprenant des éléments chauffants électriques est disposée entre la surface extérieure (2) et la seconde couche métallique (5), la seconde couche métallique (5) étant appliquée au moyen d'une pulvérisation de gaz à froid.

8. Procédé selon la revendication 7, dans lequel la seconde couche métallique (5) et/ou toute autre couche éventuellement appliquée sur la seconde couche métallique (5) présente au moins une conductivité thermique de 100 à 400 W/(mK), et/ou la conductivité thermique de la seconde couche métallique (5) et de toute autre couche éventuellement présente ensemble présente au moins 30 W/(mK), en particulier d'au moins 100 W/(mK), en particulier de 100 à 400 W/(mK).

9. Procédé selon l'une quelconque des revendications 7 à 8, dans lequel une couche extérieure du revêtement a une dureté Vickers d'au moins 100, et en particulier la seconde couche métallique (5) forme la couche extérieure.

10. Procédé selon l'une quelconque des revendications 7 à 9, dans lequel l'application de la première couche (3) favorisant l'adhérence et comprenant des éléments chauffants électriques comprend les étapes suivantes: application des éléments chauffants électriques sur la surface externe (2) de la pale de rotor (1) et application d'un matériau (3) favorisant l'adhérence sur les éléments chauffants électriques et/ou sur la surface externe (2) de la pale de rotor (1).

11. Procédé selon l'une quelconque des revendications 7 à 10, dans lequel la première couche métallique (3) favorisant l'adhérence et/ou la première couche (3) favorisant l'adhérence comprenant des éléments chauffants électriques est appliquée au moins partiellement au moyen d'une pulvérisation thermique et/ou la seconde couche métallique (5) est appliquée au moyen d'une pulvérisation de gaz froid.

12. Procédé selon l'une quelconque des revendications 7 à 11, dans lequel la seconde couche métallique (5) est couplée électriquement à un dispositif pour dissiper la foudre et/ou la première couche métallique (3) favorisant l'adhérence et/ou la première couche (3) favorisant l'adhérence comprenant des éléments chauffants est couplée à au moins un dispositif pour conduire le courant à travers la première couche métallique (3) favorisant l'adhérence et/ou les éléments chauffants électriques et/ou des moyens pour coupler électriquement la première couche métallique (3) favorisant l'adhérence et/ou la première couche (3) favorisant l'adhérence comprenant des éléments chauffants sont prévus. et/ou des moyens pour le couplage électrique de la première couche métallique (3) favorisant l'adhérence et/ou de la première couche (3) favorisant l'adhérence comprenant des éléments chauffants électriques avec au moins un dispositif pour conduire le courant à travers la première couche métallique (3) favorisant l'adhérence et/ou les éléments chauffants électriques sont prévus, dans lequel le au moins un dispositif, les moyens et/ou la pale de rotor (1) sont particulièrement conçus de telle sorte que le courant conduit à un chauffage de la seconde couche métallique (5) et/ou à un dégivrage de la surface extérieure (2) de la pale de rotor (1) et/ou de la couche la plus extérieure.

13. Eolienne comprenant une tour et une nacelle ainsi qu'au moins deux, en particulier trois pales de rotor (1) fixées à la nacelle de manière à pouvoir tourner autour d'un axe commun selon l'une des revendications précédentes 1 à 6 et/ou revêtues selon l'une des revendications précédentes 7 à 12.
